# EUROPÄISCHE PATENTSCHRIFT

(11) **EP 2 616 766 B1**
(45) Veröffentlichungstag und Bekanntmachung des Hinweises auf die Patenterteilung: **01.09.2021**
(21) Anmeldenummer: 11749361.9
(22) Anmeldetag: 20.07.2011
(51) Int. Cl.: G01B 11/275, G01B 5/14

(54) **VERFAHREN UND VORRICHTUNG ZUM KALIBRIEREN EINES REFERENZSYSTEMS ZUR FAHRZEUGVERMESSUNG**
METHOD AND APPARATUS FOR CALIBRATING A REFERENCE SYSTEM FOR VEHICLE MEASUREMENT
PROCÉDÉ ET DISPOSITIF D'ÉTALONNAGE D'UN SYSTÈME DE RÉFÉRENCE POUR LA MESURE DE VÉHICULES

(30) Priorität: 13.09.2010 DE 102010040655
(43) Veröffentlichungstag der Anmeldung: 24.07.2013
(73) Patentinhaber: Beissbarth GmbH, 80993 München (DE)
(72) Erfinder: PUCNIK, Darko, 85774 Unterfoehring (DE); WAGMANN, Christian, 80797 Muenchen (DE); BACKES, Jochen, 80687 Muenchen (DE); HODISSEN, Sven, 80637 Muenchen (DE); UFFENKAMP, Volker, 71642 Ludwigsburg (DE)
(74) Vertreter: Schmitt-Nilson Schraud Waibel Wohlfrom Patentanwälte Partnerschaft mbB
(86) Internationale Anmeldenummer: PCT/EP2011/062464
(87) Internationale Veröffentlichungsnummer: WO 2012/034745

(56) Entgegenhaltungen:
- EP-A2- 0 263 089
- WO-A1-2010/028946
- US-A- 5 425 523
- None

## Beschreibung

Die Erfindung betrifft ein Verfahren und eine Vorrichtung zum Kalibrieren eines Referenzsystems wie es in der Fahrzeugvermessung eingesetzt wird.

### Stand der Technik

Aus WO 2010/028946 A1 ist eine Fahrzeugvermessungseinrichtung für ein auf einem Messplatz stehendes Fahrzeug mit zwei Messeinheiten bekannt, wobei jede der beiden Messeinheiten ein Referenzsystem aufweist, das ausgebildet ist, um die horizontale und vertikale Lage der jeweiligen Messeinheit und die relative Lage der Messeinheiten zueinander zu bestimmen.

US5425523A offenbart ein System mit einem Kalibrierrahmen und einem Referenzsystemträger zum Kalibrieren eines Referenzsystems zur Fahrzeugvermessung, wobei der Kalibrierrahmen auf einer Platte durch eine Anzahl von Einstellelementen ausgerichtet ist, welche eine präzise räumliche Ausrichtung des Kalibrierrahmens ermöglichen, wobei das Referenzsystemträger durch eine Anzahl von Auflagepunkte rotierbar gelagert ist, sodass der Referenzsystemträger rotiert werden kann; dies bedeutet, dass der Referenzsystemträger wechselweise in alle Winkelausrichtungen auf den Auflagepunkten ausgerichtet sein kann.

Um bei der Fahrzeugvermessung genaue Ergebnisse zu erhalten, sind die Referenzsysteme vor der Durchführung der Messungen zu kalibrieren.

### Offenbarung der Erfindung

Es ist eine Aufgabe der Erfindung, eine Vorrichtung und ein Verfahren zum Kalibrieren eines derartigen Referenzsystems bereitzustellen.

Diese Aufgabe wird durch einen Kalibrierrahmen nach dem unabhängigen Anspruch 1 sowie ein Verfahren zum Kalibrieren eines Referenzsystems nach dem unabhängigen Anspruch 6 gelöst. Die abhängigen Patentansprüche beschreiben vorteilhafte Ausgestaltungen einer erfindungsgemäßen Vorrichtung bzw. eines erfindungsgemäßen Verfahrens.

Ein erfindungsgemäßer Kalibrierrahmen zum Kalibrieren eines Referenzsystems zur Fahrzeugvermessung hat eine Anzahl von Einstellelementen, welche eine präzise räumliche Ausrichtung des Kalibrierrahmens ermöglichen, und eine Anzahl definierter Auflagepunkte, die zur Aufnahme eines Referenzsystemträgers derart ausgebildet sind, dass der Referenzsystemträger in wenigstens zwei verschiedenen Ausrichtungen auf den Auflagepunkten anordbar ist, wobei, in der zweiten Ausrichtung der Referenzsystemträger gegenüber der ersten Ausrichtung um 180 Grad um eine Achse gedreht ist, die parallel zu einer von dem Kalibrierrahmen aufgespannten Ebene verläuft.

Durch das Mitteln der in den beiden Positionen gemessenen Werte des Referenzsystems heben sich Abweichungen von der exakten Ausrichtung in den beiden Positionen gegeneinander auf. Das Verfahren ermöglicht eine exakte Kalibrierung des Neigungsgebers des Referenzsystems ohne großen Aufwand und ohne dass hochgenaue Mess- und Justiervorrichtungen notwendig sind, um das Referenzsystem exakt zum Erdgravitationsfeld auszurichten.

In einer Ausführungsform ist an dem Kalibrierrahmen wenigstens ein Nivellierelement derart angebracht, dass der Kalibrierrahmen mit Hilfe des Nivellierelements durch Verstellen der Einstellelemente in zumindest einer Richtung in Bezug auf das Erdgravitationsfeld ausrichtbar ist. Durch ein derartiges Nivellierelement ist der Kalibrierrahmen mit hoher Genauigkeit relativ zum Erdgravitationsfeld ausrichtbar.

In einer Ausführungsform ist das Nivellierelement eine Libelle (Wasserwaage) oder ein elektronischer Neigungsgeber. Eine Libelle stellt ein besonders kostengünstiges und einfach zu handhabendes Nivellierelement bereit. Ein elektronischer Neigungsgeber ermöglicht eine besonders genaue Nivellierung des Kalibrierrahmens. Durch Zusammenwirken eines elektronischen Neigungsgebers mit motorisch betätigten Einstellelementen kann der Kalibrierrahmen ggf. automatisch nivelliert werden.

In einer Ausführungsform ist ein Kalibrierhilfsmittel in einer bekannten Position in Bezug auf den Kalibrierrahmen angeordnet. Durch ein in einer bekannten Position angeordnetes Kalibrierhilfsmittel kann das Referenzsystem einfach und mit hoher Genauigkeit kalibriert werden.

In einer Ausführungsform weist der Kalibrierrahmen ein Kalibrierhilfsmittel auf, das in zwei symmetrischen Positionen in Bezug auf den Kalibrierrahmen anordbar ist. Mit Hilfe eines Kalibrierhilfsmittels, das in zwei symmetrischen Positionen in Bezug an den Kalibrierrahmen anordbar ist, kann das Referenzsystem auch dann mit hoher Genauigkeit kalibriert werden, wenn die Position des Kalibrierhilfsmittels nicht genau bekannt ist.

In einer Ausführungsform schließt ein erfindungsgemäßes Verfahren ein, das Referenzsystem in wenigstens einer weiteren Position auf dem Kalibrierrahmen anzuordnen, ohne die Position des Kalibrierrahmen zu verändern, die Werte des Referenzsystems in den weiteren Positionen zu messen und die in allen Positionen gemessenen Werte zu verrechnen. Durch Verrechnen der in mehreren Positionen gemessenen Werte des Referenzsystems kann die Genauigkeit der Kalibrierung erhöht werden.

Die Erfindung wird im Folgenden anhand der beigefügten Figuren erläutert, dabei zeigt:
Figur 1 eine schematische Draufsicht auf einen erfindungsgemäßen Kalibrierrahmen 1 mit einem Referenzsystemträger in einer ersten Ausrichtung;
Figur 2 eine schematische Seitenansicht auf einen erfindungsgemäßen Kalibrierrahmen 1 mit einem Referenzsystemträger in der ersten Ausrichtung;
Figur 3 eine schematische Draufsicht auf einen erfindungsgemäßen Kalibrierrahmen 1 mit einem Referenzsystemträger in der ersten Ausrichtung;
Figur 4 eine schematische Draufsicht auf einen erfindungsgemäßen Kalibrierrahmen 1 mit einem Referenzsystemträger in der ersten Ausrichtung;
Figur 5 eine schematische Seitenansicht auf einen Kalibrierrahmen 1 mit einem Referenzsystemträger in einer zweiten Ausrichtung;
Figur 6 eine schematische Draufsicht auf einen erfindungsgemäßen Kalibrierrahmen mit einem Kalibrierhilfsmittel; und
Figur 7 eine schematische Draufsicht auf einen erfindungsgemäßen Kalibrierrahmen mit zwei symmetrisch angeordneten Kalibrierhilfsmitteln.

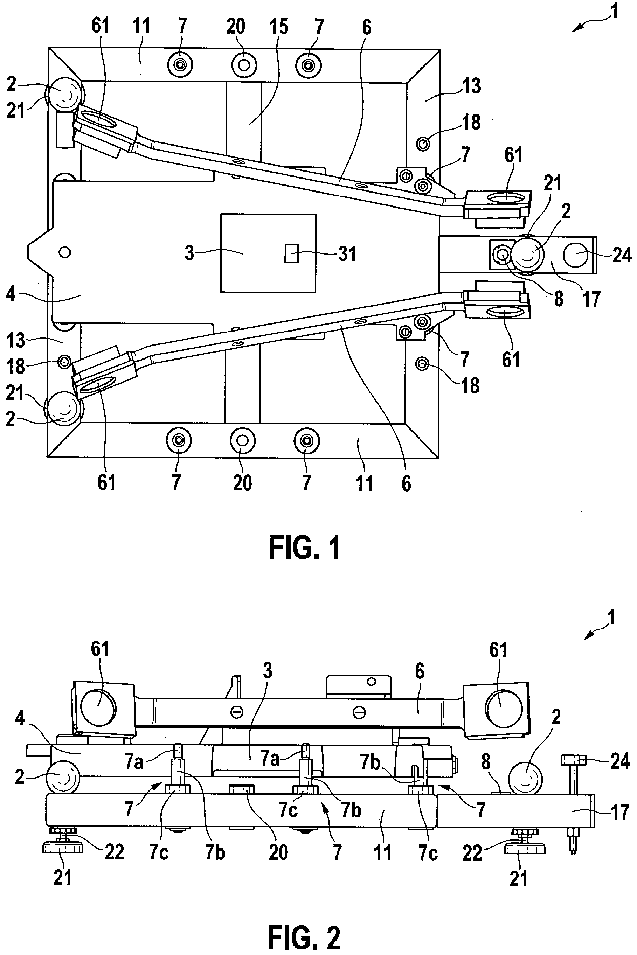

Figur 1 zeigt eine schematische Draufsicht auf einen erfindungsgemäßen Kalibrierrahmen 1, auf dem ein Referenzsystemträger 4 mit einem Referenzsystem 3 positioniert ist.

Der Kalibrierrahmen 1 ist in dem in der Figur 1 gezeigten Ausführungsbeispiel im Wesentlichen quadratisch mit zwei parallel zueinander verlaufenden ersten Trägern 11 und zwei in einem rechten Winkel zu den ersten Trägern 11 verlaufenden zweiten Trägern 13 ausgebildet. Ein dritter Träger 15 ist in der Mitte zwischen den beiden ersten Trägern 11 parallel zu den zweiten Trägern 13 angeordnet.

An einer Seite des von den ersten und zweiten Trägern 11, 13 gebildeten Quadrats ist ein vierter Träger 17 angebracht, der sich in einem rechten Winkel von der Mitte eines der zweiten Träger 13 parallel zu den ersten Trägern 11 nach außen erstreckt.

An dem vierten Träger 17 und demjenigen der zweiten Träger 13, an dem der vierte Träger 17 nicht angebracht ist, sind Füße 21 mit zugehörigen Einstellelementen 2 angebracht. Der vertikale Abstand zwischen den Füßen 21 und dem jeweiligen Träger 13, 17 ist durch Betätigen, z.B. Drehen, der Einstellelemente 2 variierbar. Die Einstellelemente 2 in Verbindung mit den zugehörigen Füßen 21 ermöglichen es, die von den Trägern 11, 13, 15 des Kalibrierrahmens 1 aufgespannten Ebene präzise im Raum auszurichten.

Die Füße 21 können magnetisch oder mit Saugnäpfen ausgebildet sein, um den Kalibrierrahmen 1 sicher aber lösbar auf einer Messeinrichtung befestigen zu können. An dem vierten Träger 17 ist zusätzlich ein Auswerfer 24 vorgesehen, der es ermöglicht, den Kalibrierrahmen 1 zu verkippen, um die Füße 21 von der Messeinrichtung zu lösen. Der Auswerfer 24 ist in einen größeren Abstand von dem zweiten Träger 13 als der Fuß 21 angebracht, so dass beim Lösen der Füße 21 durch Betätigen des Auswerfers 24 eine Hebelwirkung des Kalibrierrahmes 1 ausgenutzt werden kann.

Auf der dem Betrachter zugewandten Oberseite der Träger 11, 13 des Kalibrierrahmens 1 sind mehrere Auflagepunkte 7 ausgebildet, die zur Aufnahme passender Aufnahmepunkte einer Referenzträgerplatte 4 ausgebildet sind.

In dem in der Figur 1 gezeigten Ausführungsbeispiel ist die Referenzträgerplatte 4 mit einem Referenzträgersystem 3 derart auf den Auflagepunkten 7 des Kalibrierrahmens 1 angeordnet, dass sich die im Wesentlichen rechteckige Referenzträgerplatte 4 mit ihrer Längsrichtung parallel zu den ersten Trägern 11 des Kalibrierrahmens 1 erstreckt. Auf der Referenzträgerplatte 4 sind neben einem Referenzsystem 3, das wenigstens einen Neigungsgeber 31 umfasst, zwei Kameraträger 6 mit jeweils zwei nach außen gerichteten Kameras 61 angebracht. Die Kameraträger 6 sind dabei so angeordnet, dass die Kameras 61 auf der in der Figur 1 links gezeigten Seite einen größeren Abstand voneinander aufweisen als auf der in der Figur 1 rechts gezeigten Seite des Referenzsystemträgers 4, d.h. die Kameraträger 6 laufen von links nach rechts V-förmig aufeinander zu.

Auf dem vierten Träger 17 ist zwischen dem Einstellelement 2 und dem zweiten Träger 13, mit dem der vierte Träger 17 verbunden ist, ein Nivellierelement 8 angeordnet, das ausgebildet ist, um die räumliche Ausrichtung der von dem Kalibrierrahmen 1 aufgespannten Ebene zu bestimmen. Das Nivellierelement 8 kann z.B. als Libelle (Wasserwaage) oder als elektronischer Neigungsgeber ausgebildet sein.

Mithilfe des Nivellierelements 8 ist die räumliche Ausrichtung des Kalibrierrahmens 1 exakt bestimmbar. Durch Betätigen der Einstellelemente 2 bei gleichzeitiger Überwachung der Anzeige bzw. Ausgabe des Nivellierelements 8 kann die räumliche Ausrichtung des Kalibrierrahmens 1 so mit hoher Genauigkeit eingestellt werden. Insbesondere kann der Kalibrierrahmen 1 so eingestellt werden, dass die durch die ersten, zweiten und dritten Träger 11, 13, 15 aufgespannte Ebene exakt in einem rechten Winkel zum Erdgravitationsfeld ausgerichtet ist. Ein Referenzsystem 3, welches auf einem Kalibrierrahmen 1 angeordnet ist, der exakt in einem rechten Winkel zum Erdgravitationsfeld ausgerichteten, ist mit hoher Genauigkeit kalibrierbar.

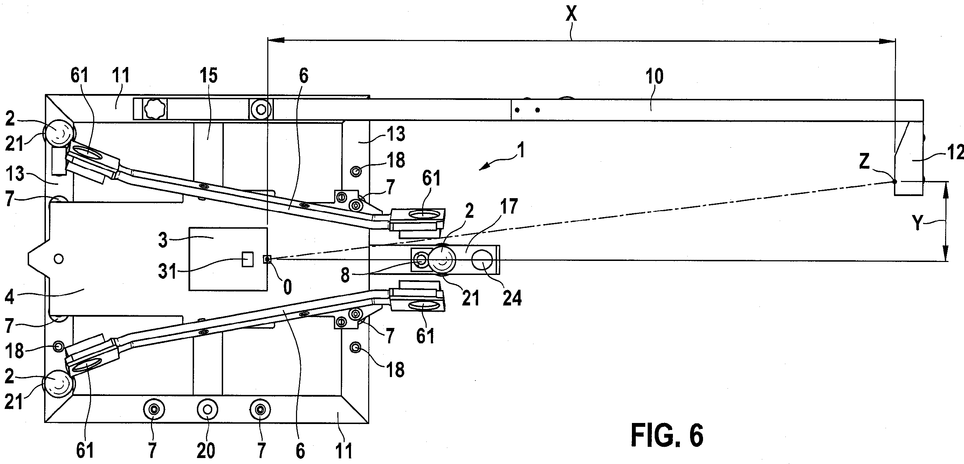

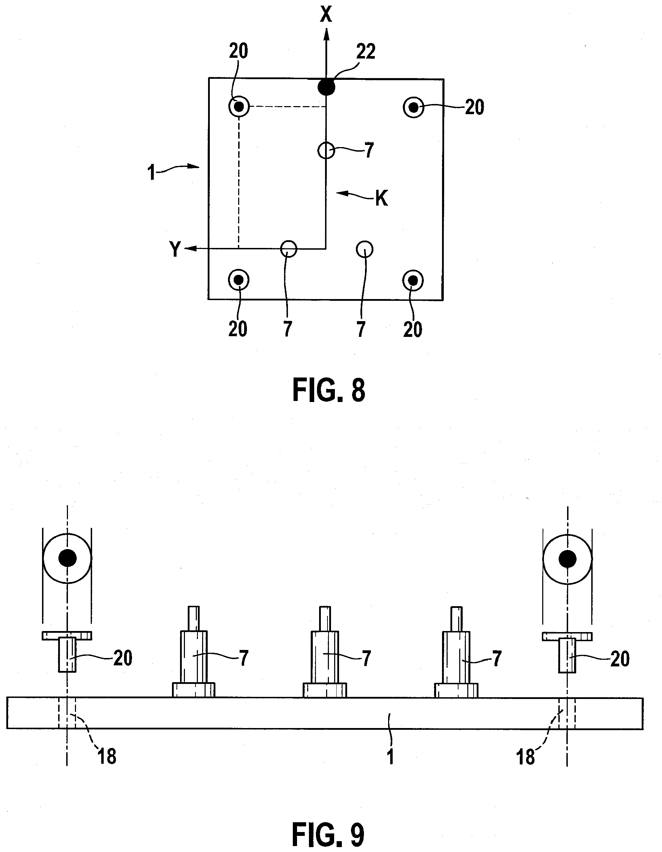

Auf den ersten und zweiten Trägern 11, 13 sind neben den Auflagepunkten 7 Passpunkte 20 und/oder Bohrungen 18, die zur Aufnahme derartiger Passpunkte 20 geeignet sind, ausgebildet. Die Funktion der Passpunkte 20 und Bohrungen 18 wird unter Bezugnahme auf die Figuren 6 bis 9 beschrieben.

Figur 2 zeigt eine Seitenansicht des in der Figur 1 gezeigten Kalibrierrahmens 1. Die verstellbaren Füße 21 mit den Einstellelementen 2 und der Auswerfer 24 sind in der Figur 2 gut erkennbar. Die Füße 21 sind insbesondere durch mit einem Außengewinde versehene Wellen 22 an den Trägern 11, 17 abgestützt. Durch Drehen der Einstellelemente 2 werden die Wellen 22 in in der Figur 2 nicht erkennbaren Bohrungen, die in den Trägern 11, 17 ausgebildet und jeweils mit einem Innengewinde versehenen sind, gedreht, so dass die an den Wellen 22 und in den Bohrungen ausgebildeten Gewinde eine Änderung des Abstandes zwischen den Füßen 21 und dem jeweiligen Träger 11, 17 bewirken.

Die Auflagepunkte 7 sind pyramidenförmig ausgebildet und bestehen in dem in der Figur 2 gezeigten Ausführungsbeispiel aus drei in axialer Richtung übereinander angeordneten Zylindern 7a, 7b, 7c, wobei jeder Zylinder 7a, 7b einen geringeren Durchmesser als der jeweils unter ihm angeordnete Zylinder 7b, 7c hat. Die obersten Zylinder 7a sind derart ausgebildet, dass sie ohne Spiel in entsprechende (in der Figur 2 nicht sichtbare) Aufnahmeöffnungen, die in dem Referenzsystemträger 4 ausgebildet sind, einführbar sind. Der Referenzsystemträger 4 mit dem Referenzsystem 3 ist so durch Einführen der obersten Zylinder 7a der Auflagepunkte 7 in entsprechende Aufnahmeöffnungen des Referenzsystemträgers 4 spielfrei auf dem Kalibrierrahmen 1 abgestützt.

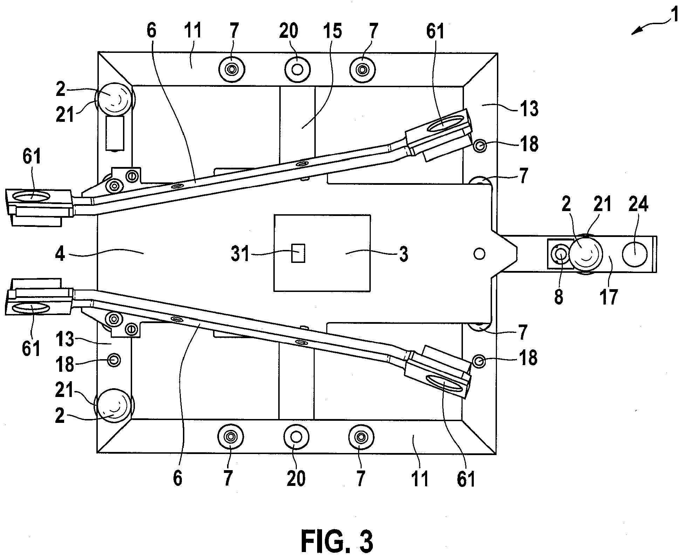

Figur 3 zeigt die aus der Figur 1 bekannte Draufsicht auf einen erfindungsgemäßen Kalibrierrahmen 1, auf dem ein Referenzsystemträger 4 mit einem Referenzsystem 3 angeordnet ist. Im Vergleich zur Figur 1 ist der Referenzsystemträger 4 mit dem Referenzsystem 3 in dem in der Figur 3 gezeigten Ausführungsbeispiel um 180° um eine Hochachse, welche durch den Mittelpunkt des durch die ersten und zweiten Träger 11, 13 aufgespannten Quadrats verläuft, gedreht. Zur Durchführung des erfindungsgemäßen Verfahrens wird der Referenzsystemträger 4 mit dem Referenzsystem 3 zunächst in der in der Figur 1 gezeigten Ausrichtung auf dem Kalibrierrahmen 1 angeordnet und die Werte des Referenzsystems 3, insbesondere des Neigungsgebers 31, werden in dieser Ausrichtung gemessen.

In einem nicht erfindungsgemäßen Beispiel, wird der Referenzsystemträger 4 mit dem Referenzsystem 3 in einer weiteren Position, die sich von der in der Figur 1 gezeigten Position unterscheidet, z.B. in der in der Figur 3 gezeigten Ausrichtung, auf dem Kalibrierrahmen 1 angeordnet, und die Werte des Referenzsystems 3 werden in dieser Ausrichtung des Referenzsystems 3 gemessen. Danach wird der Mittelwert der in den beiden Ausrichtungen gemessenen Werte des Referenzsystems 3 gebildet. So wird der Neigungsgeber 31 des Referenzsystems 3 in Bezug auf das Erdgravitationsfeld kalibriert.

Die Genauigkeit des Verfahrens kann verbessert werden, indem der Referenzsystemträger 4 mit dem Referenzsystem 3 zusätzlich in weiteren unterschiedlichen Positionen auf dem Kalibrierrahmen 1 angeordnet wird und die Werte des Referenzsystems 3 in diesen zusätzlichen Positionen gemessen und in die Mittelwertbildung mit einbezogen werden.

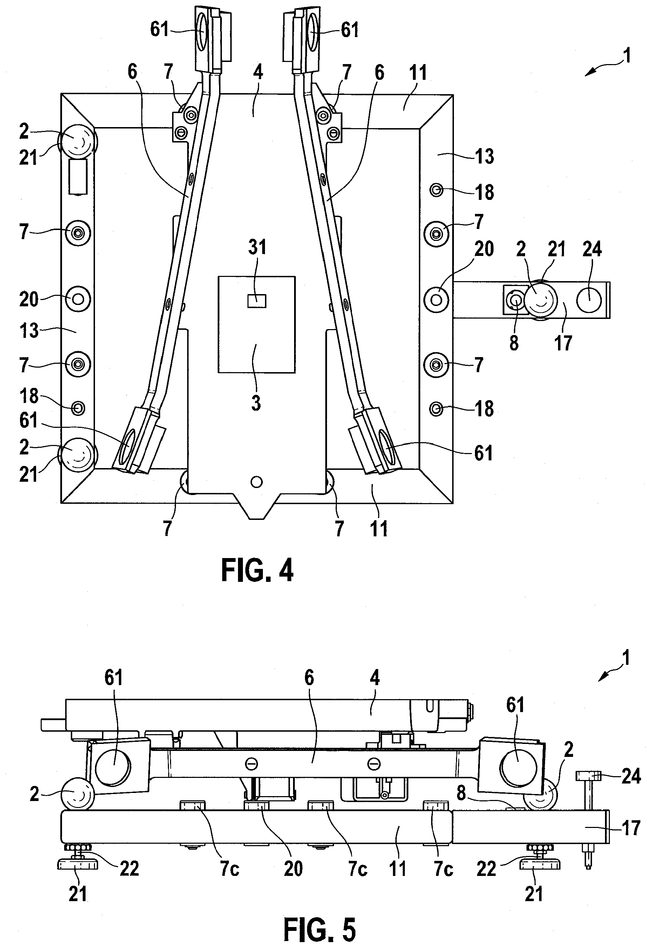

Das Referenzsystem 3 kann z.B. zusätzlich in der in der Figur 4 gezeigten Position, die gegenüber den in den Figuren 1 und 3 gezeigten Positionen um + 90° bzw. - 90° gedreht ist, angeordnet werden. Alternativ oder zusätzlich kann das Referenzsystem 3 in einer gegenüber einer in der Figur 4 gezeigten Darstellung um 180° um die Hochachse gedrehten Position angeordnet werden.

Erfindungsgemäß wird der Referenzsystemträger 4 mit dem Referenzsystem 3 und den Kameraträgern 6 um 180° um die Längs- oder Querachse, d. h. eine Achse, die parallel zur Ebene des Kalibrierrahmens 1 verläuft, gedreht auf dem Kalibrierrahmen 1 angeordnet. Eine solche Position des Referenzsystemträgers 4 ist z.B. in der Figur 5 gezeigt, die nicht Teil des beanspruchten Gegenstandes ist und nur zum besseren Verständnis der Erfindung dient.

Es werden zum Kalibrieren des Referenzsystems 3 zunächst die Werte des Referenzsystems 3, die in zwei Positionen aufgenommen worden sind, zwischen denen der Referenzsystemträger 4 um 180° gedreht worden ist, gemittelt. In einem zweiten Schritt werden die Mittelwerte, die in den verschiedenen möglichen Orientierungen bzw. Ausrichtungen des Referenzsystems 3, wie sie in den Figuren 1, 3, 4 bzw. 5 gezeigt sind, bestimmt worden sind, gemittelt.

Zum Kalibrieren des Referenzsystems 3 ist auch der Abstand des Referenzsystems 3 von einer bekannten Position zu bestimmen. Dazu kann z.B. ein Kalibrierhilfsmittel 12 verwendet werden, das in einer bekannten Position an dem Kalibrierrahmen 1 befestigt ist, wie in der Figur 6 gezeigt.

Das Kalibrierhilfsmittel 12 ist über einen Abstandshalter 10 in einer definierten Position, d.h. mit einem bekannten X-Abstand und einem bekannten Y-Abstand zu einem durch das Referenzsystem 3 definierten Ursprung O angeordnet. Auf dem Kalibrierhilfsmittel 12 ist ein Zielpunkt Z, der z.B. als LED ausgebildet ist, angebracht. Der Zielpunkt Z wird von einem Zielerfassungselement, das z. B. einen CCD-Sensor enthält, des Referenzsystems 3 erfasst, um das Referenzsystem 3 zu kalibrieren. Die Genauigkeit der Kalibrierung wird durch die Genauigkeit, mit der der Zielpunkt Z an den vorgegebenen Koordinaten X, Y angeordnet ist bzw. der Genauigkeit, mit der diese Koordinaten X, Y bekannt sind, begrenzt. In den Trägern 11, 13 des Kalibrierrahmens 1 sind Bohrungen 18 ausgebildet, um den Abstandshalter 10 in einer definierten Position sicher an dem Kalibrierrahmen 1 befestigen zu können.

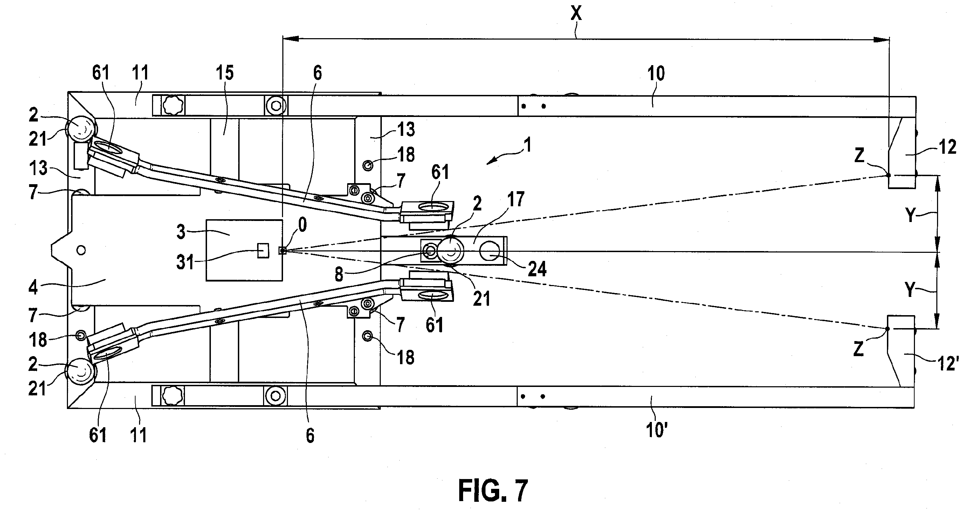

In einem alternativen, in der Figur 7 gezeigten Ausführungsbeispiel ist es nicht erforderlich, dass die Koordinaten X, Y der Position des Zielpunktes Z des Kalibrierhilfsmittels 12 exakt bekannt sind.

Stattdessen ist das Kalibrierhilfsmittel 12, 12' in zwei exakt symmetrischen Positionen in Bezug auf das Referenzsystem 3 anordbar. Nach dem Messen und Abspeichern der beiden Werte des Zielpunktes Z an den beiden symmetrischen Positionen des Kalibrierhilfsmittels 12, 12'wird ein Mittelwert gebildet, um die Aufnahmevorrichtung des Referenzsystems 3 zu kalibrieren.

Ein Referenzsystem 3 eines Messplatzes mit einem Referenzsystem 3 und einem Bildaufnahmesystem ist durch Einbringen eines erfindungsgemäßen Kalibrierrahmens 1 kalibrierbar.

Vor einer Aufnahme einer Bildsequenz mit der Aufnahmekamera eines Bildaufnahmesystems wird der Kalibrierrahmen 1 in die Kalibriervorrichtung eingelegt und fest mit dieser verbunden, um ein unbeabsichtigtes Verschieben oder Verdrehen des Kalibrierrahmens 1 während der folgenden Messungen zu verhindern.

## Patentansprüche

1. Kalibrierrahmen (1) zum Kalibrieren eines Referenzsystems (3) zur Fahrzeugvermessung, umfassend einen Referenzsystemträger (4), wobei der Kalibrierrahmen (1)
eine Anzahl von Einstellelementen (2), welche eine präzise räumliche Ausrichtung des Kalibrierrahmens (1) ermöglichen, und
eine Anzahl definierter Auflagepunkte (7) aufweist, die zur Aufnahme des Referenzsystemträgers (4) derart ausgebildet sind, dass der Referenzsystemträger (4) wechselweise in wenigstens zwei verschiedenen Ausrichtungen auf den Auflagepunkten (7) anordbar ist;
**dadurch gekennzeichnet, dass** die wenigstens zwei verschiedenen Ausrichtungen eine erste Ausrichtung und eine zweite Ausrichtung umfassen, wobei der Referenzsystemträger (4) in der zweiten Ausrichtung gegenüber der ersten Ausrichtung um 180° um eine Achse gedreht ist, die parallel zu einer von dem Kalibrierrahmen (1) aufgespannten Ebene verläuft.

2. Kalibrierrahmen (1) nach Anspruch 1, wobei der Kalibrierrahmen (1)
ein Nivellierelement (8) aufweist, welches die räumliche Ausrichtung des Kalibrierrahmens (1) in Bezug auf das Erdgravitationsfeld anzeigt.

3. Kalibrierrahmen (1) nach Anspruch 2, wobei das Nivellierelement (8) eine Libelle oder ein elektronischer Neigungsgeber ist.

4. Kalibrierrahmen (1) nach einem der vorangehenden Ansprüche, mit einem Kalibrierhilfsmittel (12, 16), das in Bezug auf den Kalibrierrahmen (1) in einer bekannten Position anordbar ist.

5. Kalibrierrahmen (1) nach einem der vorangehenden Ansprüche mit einem Kalibrierhilfsmittel (12, 16), das in Bezug auf den Kalibrierrahmen (1) in zwei symmetrischen Positionen anordbar ist.

6. Verfahren zum Kalibrieren eines Referenzsystems (3) zur Fahrzeugvermessung unter Verwendung eines einen Referenzsystemträger (4) umfassenden Kalibrierrahmens (1) nach Anspruch 1, wobei das Verfahren die folgenden Schritte umfasst:
Anordnen des Referenzsystemträgers (4) mit dem Referenzsystem (3) in einer ersten Ausrichtung auf dem Kalibrierrahmen (1);
Messen von Werten des Referenzsystems (3) in der ersten Ausrichtung;
Anordnen des Referenzsystemträgers (4) mit dem Referenzsystem (3) in einer zweiten Ausrichtung auf dem Kalibrierrahmen (1), wobei sich die zweite Ausrichtung von der ersten Ausrichtung unterscheidet, ohne die Position des Kalibrierrahmens (1) zu verändern;
Messen der Werte des Referenzsystems (3) in der zweiten Ausrichtung;
Mitteln der in der ersten und in der zweiten Ausrichtung gemessenen Werte des Referenzsystems (3)
**dadurch gekennzeichnet, dass** der Referenzsystemträger (4) in der zweiten Ausrichtung gegenüber der ersten Ausrichtung um 180° um eine Achse gedreht ist, die parallel zu einer von dem Kalibrierrahmen (1) aufgespannten Ebene verläuft.

7. Verfahren nach Anspruch 6, wobei das Verfahren einschließt,
den Referenzsystemträger (4) in wenigstens einer weiteren Ausrichtung auf dem Kalibrierrahmen (1) anzuordnen, ohne die Position des Kalibrierrahmens (1) zu verändern,
die Werte des Referenzsystems (3) in den weiteren Ausrichtungen zu messen; und
die in allen Ausrichtungen gemessenen Werte des Referenzsystems (3) zu verrechnen.

8. Verfahren nach Anspruch 7, wobei das Verfahren einschließt, in einem ersten Schritt die Werte, die in um 180 Grad gedrehten Ausrichtungen des Referenzsystems (3) gemessen worden sind, zu mitteln und in einem zweiten Schritt die so bestimmten Mittelwerte zu mitteln.

9. Verfahren nach einem der Ansprüche 6 bis 8, wobei das Verfahren umfasst, den Kalibrierrahmen (1) mit Hilfe eines Nivellierelements (8) in Bezug auf das Erdgravitationsfeld auszurichten.

## Claims

1. A calibration frame (1) for calibrating a reference system (3) for vehicle measurement, comprising a reference system carrier (4),
the calibration frame (1) comprising
a plurality of setting elements (2) which enable a precise spatial orientation of the calibration frame (1), and
a plurality of defined points of support (7) which, for accommodating the reference system carrier (4), are designed such that the reference system carrier (4) is adapted to be arranged on the points of support (7) alternatingly in at least two different orientations,
**characterized in that** the at least two different orientations comprise a first orientation and a second orientation, the reference system carrier (4) in the second orientation being rotated with respect to the first orientation by 180° about an axis extending parallel to a plane defined by the calibration frame (1).

2. The calibration frame (1) according to claim 1,
wherein the calibration frame (1) comprises a leveling element (8) which indicates the spatial orientation of the calibration frame (1) in relation to the earth's gravitation field.

3. The calibration frame (1) according to claim 2,
wherein the leveling element (8) is a level indicator or an electronic inclination sensor.

4. The calibration frame (1) according to any of the preceding claims, comprising an auxiliary calibration means (12, 16) which is adapted to be arranged in a known position in relation to the calibration frame (1).

5. The calibration frame (1) according to any of the preceding claims, comprising an auxiliary calibration means (12, 16) which is adapted to be arranged in two symmetrical positions in relation to the calibration frame (1).

6. A method for calibrating a reference system (3) for vehicle measurement using a calibration frame (1) comprising a reference system carrier (4), according to claim 1, the method comprising:
arranging the reference system carrier (4) along with the reference system (3) in a first orientation on the calibration frame (1);
measuring values of the reference system (3) in the first orientation;
arranging the reference system carrier (4) along with the reference system (3) in a second orientation on the calibration frame (1), the second orientation differing from the first orientation, without changing the position of the calibration frame (1);
measuring the values of the reference system (3) in the second orientation;
averaging the values of the reference system (3) measured in said first and second orientations,
**characterized in that** the reference system carrier (4) in the second orientation is rotated with respect to the first orientation by 180° about an axis extending parallel to a plane defined by the calibration frame (1).

7. The method according to claim 6,
said method further comprising
arranging the reference system carrier (4) in at least one additional orientation on the calibration frame (4), without changing the position of the calibration frame (1),
measuring the values of the reference system (3) in the additional orientations; and
offsetting the values of the reference system (3) measured in all orientations against each other.

8. The method according to claim 7,
wherein the method comprises, in a first step, averaging the values which were measured in orientations of the reference system (3) rotated by 180°, and, in a second step, averaging the so determined average values.

9. The method according to any of claims 6 to 8,
wherein the method comprises orienting the calibration frame (1) in relation to the earth's gravitation field by means of a leveling element (8).

## Revendications

1. Cadre d'étalonnage (1) pour l'étalonnage d'un système de référence (3) pour la mesure de véhicules, comprenant un support de système de référence (4),
le cadre d'étalonnage (1) comprenant
une pluralité d'éléments de réglage (2) qui permettent une orientation précise du cadre d'étalonnage (1) dans l'espace, et
une pluralité de points d'appui (7) définis, prévus pour accueillir le support de système de référence (4) et réalisés de telle sorte que le support de système de référence (4) peut être disposé alternativement selon au moins deux orientations différentes sur les points d'appui (7) ;
**caractérisé en ce que** les deux orientations différentes au moins englobent une première orientation et une deuxième orientation, sachant que le support de système de référence (4) dans la deuxième orientation est tourné à 180° par rapport à la première orientation autour d'un axe qui est parallèle à un plan défini par le cadre d'étalonnage (1).

2. Le cadre d'étalonnage (1) selon la revendication 1, ce cadre d'étalonnage (1) présentant un élément de mise à niveau (8) qui affiche l'orientation spatiale du cadre d'étalonnage (1) par rapport au champ de gravitation terrestre.

3. Le cadre d'étalonnage (1) selon la revendication 2, dans lequel l'élément de mise à niveau (8) est un niveau à bulle ou inclinomètre électronique.

4. Le cadre d'étalonnage (1) selon l'une quelconque des revendications précédentes, avec un instrument d'étalonnage (12, 16) qui peut être disposé dans une position donnée par rapport au cadre d'étalonnage (1).

5. Le cadre d'étalonnage (1) selon l'une quelconque des revendications précédentes, avec un instrument d'étalonnage (12, 16) qui peut être disposé dans deux positions symétriques par rapport au cadre d'étalonnage (1).

6. Procédé d'étalonnage d'un système de référence (3) pour la mesure de véhicules, qui utilise un cadre d'étalonnage (1) comprenant un support de système de référence (4) selon la revendication 1, ce procédé comprenant les étapes suivantes :
agencement du support de système de référence (4) avec le système de référence (3) selon une première orientation sur le cadre d'étalonnage (1) ;
mesure de valeurs du système de référence (3) selon la première orientation ;
agencement du support de système de référence (4) avec le système de référence (3) selon une deuxième orientation sur le cadre d'étalonnage (1), la deuxième orientation étant différente de la première orientation, sans modifier la position du cadre d'étalonnage (1) ;
mesure des valeurs du système de référence (3) selon la deuxième orientation ;
calcul de la moyenne des valeurs mesurées selon la première et la deuxième orientation du système de référence (3)
**caractérisé en ce que**
le support de système de référence (4) dans la deuxième orientation est tourné à 180° par rapport à la première orientation autour d'un axe qui est parallèle à un plan défini par le cadre d'étalonnage (1).

7. Procédé selon la revendication 6, ce procédé incluant de
disposer le support de système de référence (4) selon au moins une orientation supplémentaire sur le cadre d'étalonnage (1), sans modifier la position du cadre d'étalonnage (1) ;
mesurer les valeurs du système de référence (3) dans les autres orientations ; et intégrer au calcul les valeurs mesurées dans toutes les orientations du système de référence (3).

8. Procédé selon la revendication 7, ce procédé incluant, dans un premier temps, d'établir la moyenne des valeurs qui ont été mesurées dans les orientations tournées à 180° du système de référence (3) et, dans un deuxième temps, d'établir une moyenne à partir des valeurs moyennes ainsi calculées.

9. Procédé selon l'une quelconque des revendications 6 à 8, ce procédé impliquant d'orienter le cadre d'étalonnage (1) à l'aide d'un élément de mise à niveau (8) par rapport au champ de gravitation terrestre.
